## Europäisches Patentamt

## European Patent Office

## Office européen des brevets

(11) Veröffentlichungsnummer: **0 175 169**
**B1**

(12) **EUROPÄISCHE PATENTSCHRIFT**

(45) Veröffentlichungstag der Patentschrift:
**27.09.89**

(21) Anmeldenummer: **85110590.8**

(22) Anmeldetag: **23.08.85**

(51) Int. Cl.⁴: **F 16 L 21/08,** F 16 L 21/04,
F 16 L 25/02

(54) **Muffenverbindung.**

(30) Priorität: **17.09.84 CH 4450/84**

(43) Veröffentlichungstag der Anmeldung:
**26.03.86 Patentblatt 86/13**

(45) Bekanntmachung des Hinweises auf die Patenterteilung:
**27.09.89 Patentblatt 89/39**

(84) Benannte Vertragsstaaten:
**DE FR IT**

(56) Entgegenhaltungen:
**AT-B- 350 860**
**CH-A- 604 073**
**DD-A- 105 498**
**DE-A- 2 754 984**
**DE-B- 2 162 435**

(73) Patentinhaber: **VON ROLL AG, CH-4563 Gerlafingen (CH)**

(72) Erfinder: **Bergmann, Bernhard, Rainweg 6, CH-4710 Balsthal (CH)**

(74) Vertreter: **EGLI-EUROPEAN PATENT ATTORNEYS, Horneggstrasse 4, CH-8008 Zürich (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Muffenverbindung für zwei Rohrleitungselemente, bei der das Spitzende des einen Rohrleitungselementes in das Muffenende des andern Rohrleitungselementes eingesteckt und durch einen Elastomer-Dichtungsring abgedichtet ist, wobei als Schubsicherung der Aussenumfang des einen Rohrleitungselementes durch einen Haltering umfasst ist, auf dem sich ein Schubsicherungsring abstützt, der mit dem Muffenende des andern Rohrleitungselementes fest verbunden ist.

Die Muffenverbindung stellt eine bekannte und viel verwendete Rohrverbindung dar, die vor allem bei gegossenen Druckrohren, Formstücken und Armaturen verwendet wird und sich auch bei schwierigen Betriebsbedingungen bewährt hat. Die Muffenverbindung weist jedoch den Nachteil auf, dass sie keine in axialer Richtung wirkende Kräfte aufnehmen kann, so dass bei einer solchen Anwendung zusätzliche Verankerungsmittel eingesetzt werden müssen.

Es ist weiter bekannt, die Muffenverbindung selbst so auszugestalten, dass sie Axialkräfte aufnehmen kann. Diese zusätzlichen Mittel werden als Schubsicherung bezeichnet und es sind hierüber verschiedene Ausführungsformen bekannt. Bei einer bekannten Ausführungsform (CH-PS 622 597 und DE-PS 2 162 435) setzt sich die Schubsicherung im wesentlichen aus einem Haltering und einem Schubsicherungsring zusammen. Der Haltering wird auf das Spitzende des einen Rohrleitungselementes aufgeschoben und weist an seinem Innenumfang eine Verzahnung auf, die den Kraftschluss vom Spitzende des einen Rohrleitungselementes über Halte- und Schubsicherungsringe auf das andere Rohrleitungselement sicherstellt. In einer andern Ausführung ist die Oberfläche an seinem Innenumfang glatt ausgebildet und eine am Spitzende angebrachte Schweissraupe ermöglicht den Kraftschluss vom Spitzende auf den Haltering. Der Aussenumfang des Halteringes ist als Kugelzone ausgebildet, auf der sich die ebenfalls kugelförmig ausgebildete Innenfläche des Schubsicherungsringes abstützt. Der Schubsicherungsring ist mit dem Muffenende verbunden, beispielsweise durch Halteklauen.

Beide Ausführungen weisen erhebliche Nachteile auf. Die ungeschützte Verzahnung ist Korrosionsangriffen ausgesetzt. Primär besteht die Gefahr, dass bei abgerosteten Zahnspitzen die Funktionssicherheit der Schubsicherung gefährdet sein kann. Zum andern ist die durch den Eingriff der Zähne verletzte Spitzendoberfläche ebenfalls Korrosionsangriffen ausgesetzt. Die Standzeiterwartung des betreffenden Rohrleitungselementes wird dadurch erheblich herabgesetzt.

Das Anbringen einer Schweissraupe bedingt einen zusätzlichen Arbeitsaufwand und Materialbedarf. Bei Ausführung auf der Baustelle, wie dies bei der Anfertigung von sogenannten Kurz- und Passlängen oft der Fall ist, schlägt dies ganz speziell kostenbelastend zu Buche. In qualitativer Hinsicht müssen ebenfalls Einbussen hingenommen werden. Zu tiefer Einbrand der Schweissraupe, Gefügeveränderungen im Werkstoff und eine Zerstörung der korrosionsfesten Gusshaut führen zu einer Schwächung des Rohrleitungselementes.

Bei einer weiteren bekannten Ausführungsform (CH-PS 569 913) werden anstelle eines Halteringes keilförmige Haltesegmente verwendet, die in Ausnehmungen am Muffenende, am Schraubring oder am Anpressring eingeführt und mittels Hammerschlägen in einem Bereich der Ausnehmungen mit kleinerem Durchgang versetzt werden, wodurch eine Keilverbindung entsteht.

Allen drei Ausführungen haftet der im vorangehenden Abschnitt beschriebene Nachteil in bezug auf Korrosionsangriffe an den ungeschützten Verzahnungen an.

Die Ausführung mit den Ausnehmungen am Muffenende bedingt eine Änderung aller zur Herstellung der Rohrleitungselemente benötigten Muffenkernbüchsen.

Die Ausführungen mit den Ausnehmungen am Schraub- und Anpressring erfordern eine Änderung der entsprechenden Formeinrichtungen. Nebst einer relativen Versteifung der Schraub- und Stopfbüchsenmuffenverbindung tritt nachteilig in Erscheinung, dass die nach dem Stand der Technik an eine Muffenverbindung gestellten Funktionsanforderungen bezüglich Abdichtung und Längskraftschluss in zwei voneinander unabhängigen Systemen nicht erfüllt werden können.

Bei einer weiteren bekannten Ausführungsform (US-PS 4 330 143) ist die Breite des Halteringes grösser als der Rohrdurchmesser, um das Rutschen des Spitzendes bei Auftreten von Axialkräften zu vermeiden. Dies ergibt jedoch eine sehr grosse Bauhöhe, weshalb der Schubsicherungsring als Flansch ausgebildet und am Muffenende ein ähnlicher Flansch abgestützt ist. Der Schubsicherungsring wird hierbei mittels Schraubenbolzen mit dem Flansch des Muffenendes verbunden.

Diese Ausführungsform ist für die meisten Fälle zu kompliziert und aufwendig. Ein weiterer Nachteil ist die starke Versteifung der Verbindung, weshalb sie nur bei besonderen Anwendungen in Betracht fällt.

Bei einer weiteren bekannten Muffenverbindung (DD-A 105 498) ist auf dem Muffenende ein Schubsicherungsring aufgeschraubt, der ein ringförmiges Klemmelement umgibt. In der Muffe ist eine auf dem Rohrende angeordnete Manschette eingebaut, welche mit ihrer Stirnseite am Klemmelement anliegt. Beim Druckaufbau im Leitungsinnern wird die Manschette durch den Druck beaufschlagt und drückt dadurch in axialer Richtung gegen das Klemmelement, das dadurch gegen die konische Innenfläche des Schubsicherungsringes geschoben und dadurch auf den Umfang des Rohrendes gepresst wird. Diese Muffenverbindung stellt eine Sonderausführung dar, welche bei den üblichen Muffenverbindungen nicht verwendbar ist. Nachteilig ist jedoch, dass der auf das Klemmelement wirkende Axialschub erst beim Druckaufbau in der Leitung wirksam ist und zudem durch die grosse Reibung der Manschette auf der Oberfläche entsprechend kleiner ist. Mit dieser Einrichtung wird somit keine Vorspannung des Klemmelementes erreicht. Zudem sind keine Massnahmen zum Schutz der auf das Klemmelement an der Oberfläche des Rohrendes eingeformten Verzahnung vorgesehen.

Die Erfindung betrifft ebenfalls eine Schubsicherung, bei der ein Haltering mit einer kugelförmigen Aussenfläche und ein Schubsicherungsring mit kugeliger Innenfläche Anwendung findet, wobei letzterer mit dem Muffenende verbunden ist. Bei einer solchen Schubsicherung ist es Aufgabe der Erfindung, eine Muffenrohrverbindung der eingangs beschriebenen Art so auszugestalten, dass dem Haltering zusätzliche Stützmittel zugeordnet werden, die jedoch keine Veränderung am Spitzende bewirken. Zudem soll der Bereich, in welchem die Verzahnung des Halteringes sich an der Oberfläche des Spitzendes festkrallt und hierbei die Oberfläche des Spitzendes freilegt, gegen Korrosion geschützt werden.

Diese Aufgabe wird gemäss der Erfindung dadurch gelöst, dass zwischen der muffenseitigen Stirnfläche des Halteringes und der Stirnfläche des Muffenendes ein elastischer, einen permanenten Druck auf die dem Muffenende zugekehrte Seite des Halterings ausübender Druckring und auf der dem Muffenende abgewandten Seite des Halteringes ein elastischer Lippendichtungsring angeordnet ist.

Die Erfindung ist in der Zeichnung in zwei Ausführungsformen dargestellt und nachfolgend beschrieben. Es zeigen:

Fig. 1 einen Längsschnitt einer Muffenverbindung, bei der nur die eine Hälfte des Rohres dargestellt ist,

Fig. 2 einen Schnitt eines Schubsicherungsringes für die Muffenverbindung nach Fig. 1,

Fig. 3 einen Schnitt eines Halteringes der Muffenverbindung nach Fig. 1,

Fig. 4 einen Längsschnitt einer zweiten Ausführungsform einer Muffenverbindung,

Fig. 5 einen Schnitt eines Schubsicherungsringes für die Muffenverbindung nach Fig. 4 und

Fig. 6 einen Schnitt eines Zwischenringes für die Muffenverbindung nach Fig. 4.

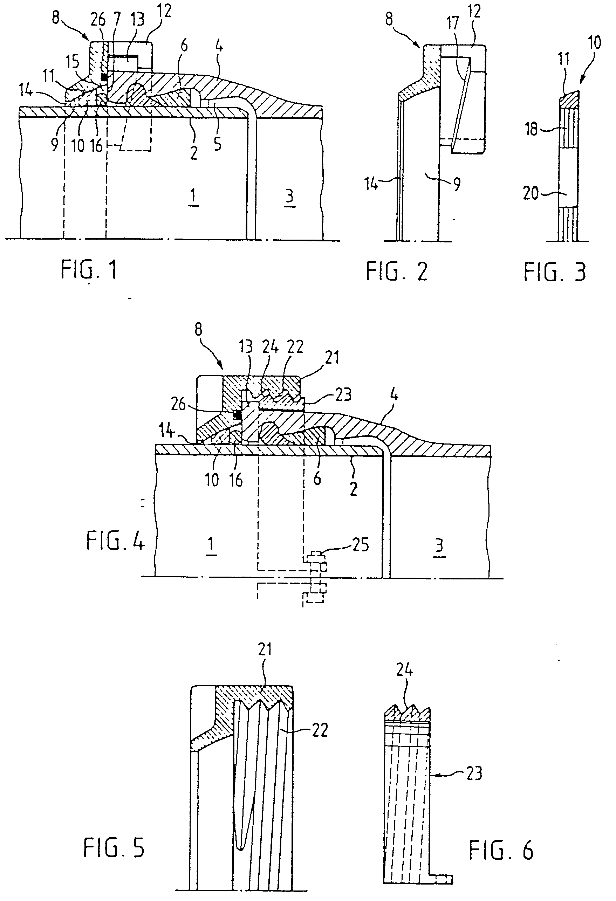

In der in Fig. 1 dargestellten Muffenverbindung zweier Rohrleitungselemente ist mit 1 ein Rohrleitungselement mit einem Spitzende 2 und mit 3 ein anderes Rohrleitungselement mit einem Muffenende 4 dargestellt. Das Spitzende 2 ist in das Muffenende 4 gesteckt, wobei zwischen den beiden Wandungen ein Spalt 5 gebildet wird, der durch einen Dichtungsring 6 abgedichtet wird. Die Innenwandung des Muffenendes 4 ist im Hinblick auf eine zuverlässige Lagerung des Dichtungsringes 6 mit einem Profil versehen. An der Stirnseite 7 des Muffenendes 4 schliesst ein Schubsicherungsring 8 an, dessen Innenfläche 9 Kugelform aufweist. Dieselbe Kugelform weist auch ein vom Schubsicherungsring 8 umgebener Haltering 10 an seiner Aussenfläche 11 auf.

Der Schubsicherungsring 8 weist muffenseitig Klauen 12 auf, die einen Bund 13 übergreifen, der jedoch nicht als geschlossener Ring ausgebildet ist, sondern einzelne Ringabschnitte aufweist, die durch Durchbrüche zum Durchschieben der Klauen 12 voneinander getrennt sind. An der vom Muffenende 4 abgewandten Seite des Schubsicherungsringes 8 ist ein Dichtungselement 14, z.B. ein Lippendichtungsring, angeordnet, der den bestehenden Spalt zwischen dem Schubsicherungsring 8 und dem Spitzende 2 schliesst.

An die Stirnfläche 7 des Muffenendes 4 legt sich ein in dem Schubsicherungsring 8 gelagerter O-Ring 26 an, der die Berührungsflächen des Muffenendes 4 und des Schubsicherungsringes 8 im Bereich der Stirnfläche 7 abdichtet.

Zwischen dem Haltering 10 und der Stirnseite 7 des Muffenendes 4 ist ein Spaltraum 15 gebildet, in dem ein Druckring 16 liegt. Wesentlich ist hierbei, dass der Druckring 16 sowohl mit der dem Muffenende 4 zugekehrten Seite des Halteringes 10, als auch mit der Stirnfläche 7 des Muffenendes 4 sowie mit dem Spitzende 2 in Druckberührung steht, d.h. dank seiner Abstützung auf die Stirnfläche 7 des Muffenendes 4 und die Oberfläche des Spitzendes 2 vermag er einen permanenten Druck auf die dem Muffenende 4 zugekehrte Seite des Halteringes 10 auszuüben. Auch sollen der O-Ring 26 und das Dichtelement 14 die Halteringkammer 15 dicht abschliessen, wodurch Korrosionseinflüsse auf die Kontaktflächen der Verzahnung 18 am Haltering 10 und die Oberfläche am Spitzende 2 weitgehend abgehalten werden. An den Kontaktflächen krallt sich die verzahnte Innenfläche des Halteringes 10 in die Oberfläche des Spitzendes 2 ein, wobei die auf den Rohrleitungselementen aufgebrachte Schutzschicht örtlich verletzt wird, und damit ihre Korrosionsschutzwirkung einbüsst. Deshalb ist dieser Bereich als geschlossener Raum ausgebildet, der als Halteringkammer 15 bezeichnet wird und durch das Dichtelement 14 und den elastischen Ring 26 abgedichtet sind.

In Fig. 2 ist der Schubsicherungsring 8 allein dargestellt. Hieraus ist erkennbar, dass die Klauen 12 eine Schrägfläche 17 aufweisen, mit Hilfe welcher der Schubsicherungsring 8 an dem Bund 13 festgespannt werden kann.

Der in Fig. 3 dargestellte Haltering 10 weist an seiner Innenfläche eine Verzahnung 18, z.B. in Form von Rillen, auf. Die Verzahnung 18 ist durch Ausnehmungen 20 unterbrochen; an diesen Stellen liegt der Haltering 12 nicht auf dem Spitzende 2 auf. Der Haltering 10 ist zweckmässig zur Erreichung einer grösseren Elastizität geschlitzt.

Der Zusammenbau der beschriebenen Muffenverbindung erfolgt in zwei Montagephasen, nämlich dem Steckvorgang und dem Kraftschluss. Beim Steckvorgang werden die zu verbindenden Rohrleitungselemente 1 und 3 zusammengesteckt, wobei der Steckmuffendichtring 6 die Dichtfunktion ausübt. In Vorbereitung der zweiten Montagephase werden noch vor dem Steckvorgang die zum Kraftschluss der Muffenverbindung benötigten Konstruktionselemente, wie Schubsicherungsring 8, einschliesslich der Dichtelemente 14 und 26, Haltering 10 und Druckring 16 auf das Spitzende 2 des Rohrleitungselementes geschoben.

Der Kraftschluss der an sich nicht längskraftschlüssigen Muffenverbindung wird mittels der beschriebenen Schubsicherung erreicht. Bei der Ausführung nach Fig. 1 wird der Schubsicherungsring 8 durch die Klauen 12 bzw. durch das Gewinde 24 am zweiteiligen Gewindering 23 bei der Ausführung nach Fig. 2 fest mit dem Muffenende 4 verbunden. Bei diesem Montagevorgang führt der Schubsicherungsring 8 eine gegen das Muffenende 4 gerichtete axiale Verschiebung aus, die ihrerseits auch auf den Haltering 10 übertragen wird. Bis zur beidseitigen Berührung des Druckringes 16 einerseits mit der dem Muffenende 4 zugewandten Seite des Halteringes 10 und andererseits der Stirnfläche 7 des Muffenendes 4 verharrt das Spitzende des Rohrleitungselementes 1 in seinem Lagezustand, d.h. es macht die vorerwähnte axiale Verschiebung nicht mit. Wesentlich an der Erfindung sind die Vorgänge, die sich nach der beschriebenen beidseitigen Berührung des Druckringes 16 abspielen und den eigentlichen Kraftschluss der Muffenverbindung einleiten. Bei einer Fortführung der axialen Verschiebung des Schubsicherungsringes 8 übt der Druckring 16, als Reaktion auf die zu seinem jeweiligen Verformungszustand erforderliche Kraft, eine gleich grosse, gegen den Haltering gerichtete Axialkraft aus. Als Folge der an der kugelförmigen Innenfläche 9 des Schubsicherungsringes 8 stattfindenden Kräftezerlegung wirkt auf den Haltering 10 eine gegen die Rohrachse gerichtete Radialkraft, welche ein Eindringen der Verzahnung 18 in die Oberfläche des Spitzendes 2 einleitet; die Muffenverbindung ist nun längskraftschlüssig.

Zusätzliche Längsbeanspruchungen der kraftschlüssigen Muffenverbindung, wie sie beispielsweise durch den Druck in der Rohrleitung erzeugt werden können, bewirken eine Erweiterung des Eingriffs der Verzahnung 18 am Haltering 10 und führen zu einer Intensivierung des Kraftschlusses.

Bei der Muffenverbindung nach Fig. 4 ist die Schubsicherung in gleicher Weise ausgebildet wie bei der Ausführung nach Fig. 1. Gleiche Bezugszahlen bezeichnen dieselben Teile.

Während in Fig. 1 der Schubsicherungsring 8 bajonettverschlussartig mit dem Muffenende 4 verbunden wird, wird der Schubsicherungsring 8 der Ausführung nach Fig. 4 mit dem Muffenende 4 verschraubt. Dementsprechend weist der Schubsicherungsring muffenseitig einen zylindrischen Stutzen 21 auf, an dessen Innenseite ein Innengewinde 22 angeordnet ist. Am Aussenumfang des Muffenendes 4 in der Nähe des Bundes 13, der hier als ganzer Ring ausgebildet sein kann, ist ein zweiteiliger Ring 23 befestigt, der am Aussenumfang ein Aussengewinde 24 aufweist, auf das der Schubsicherungsring 8 aufgeschraubt wird, womit eine feste, formschlüssige Verbindung mit dem Muffenende 4 erreicht wird. Aus Fig. 4 ist die Ausbildung des zweiteiligen Ringes gestrichelt dargestellt. Die beiden Hälften des Ringes werden zusammengezogen, z.B. Schraubenbolzen 25.

Aus Fig. 5 und 6 ist die Ausbildung des Schubsicherungsringes 8 und des zweiteiligen Gewinderinges 23 besser erkennbar.

Die Rohrleitungselemente 1, 2 können aus Grauguss, duktilem Guss oder auch aus Kunststoff geformt sein, während der Dichtungsring 6, das Dichtungselement 14 und der Druckring 16 aus einem Elastomer, z.B. aus Natur- oder Kunstgummi, hergestellt sein können.

Die beschriebene Muffenverbindung weist verschiedene Vorteile auf:

- Die an sie gestellten Funktionsanforderungen «Abdichten» und «Schubsichern» werden konstruktiv in zwei getrennten Systemen gelöst, nämlich, das Abdichten mit der seit Jahrzehnten bewährten Steckmuffenverbindung und der Kraftschluss respektive das Schubsichern mit der beschriebenen Schubsicherung.

- In der beschriebenen Ausführung erlaubt sie eine Herstellung der Steckmuffenrohre, -formstücke und -armaturen ohne Veränderung der bestehenden Formeinrichtungen und Kernbüchsen sowie eine Beibehaltung des eingeführten Sortimentes.

Eine Einführung der neu entwickelten Muffenverbindung lässt sich unter Einsatz von geringen Investitionsmitteln erreichen. Die Lagerhaltung erfährt keine zusätzliche Kostenbelastung.

- Sie erfordert keine Schweissraupe am Spitzende des zu sichernden Rohrleitungselementes. Dies ist speziell bei der Erstellung von sogenannten Kurz- und Passlängen auf der Baustelle von Bedeutung. Die manuelle Schweissarbeit und die anschliessend erforderliche Sanierung der Innenbeschichtung erübrigen sich. Befürchtungen wegen erheblich geschwächten Wanddicken zufolge Einbrand und Gefügeveränderungen im Werkstoff sowie die ganze Problematik über die zu erwartenden Korrosionsangriffe entfallen demzufolge. Bei der Montage sind keine Schweissfachleute erforderlich.

Dies alles trägt dazu bei, dass sich sowohl bei der Fabrikation als auch bei der Montage bei gleichzeitiger Qualitätsverbesserung beträchtliche Kosteneinsparungen erzielen lassen.

- Es kann zwischen einer elektrisch überbrückten oder isolierten Ausführung gewählt werden, ohne dass dabei auf andere Rohrleitungselemente gegriffen werden muss.

- Die Erfindung ermöglicht, die Eindringungstiefe der Verzahnung am Haltering in die Spitzendoberfläche des zu sichernden Rohrleitungselementes optimal zu gestalten. Insbesondere erlaubt sie, die vom Haltering auf die Spitzendoberfläche zu übertragende Radialkraft durch konstruktive Massnahmen zweckmässig zu variieren, so dass sich keine Überbeanspruchung am Spitzende 2 des Rohrleitungselementes 1 einstellen wird.

- Die Auslenkungsmöglichkeit bleibt uneingeschränkt erhalten.
- Die beschriebene Schubsicherung kommt mit einem verhältnismässig kleinen Aussendurchmesser aus, was im Bereich der Muffenaussenkontur bei isolierten Rohrleitungen im Hinblick auf die Dimensionierung des Mantelrohres respektive bei kanalverlegten Rohrleitungselementen des Kanalprofils von Bedeutung ist. Kostenmässig wirkt sich dies vorteilhaft aus.

## Patentansprüche

1. Muffenverbindung für zwei Rohrleitungselemente (1, 3), bei der das Spitzende (2) des einen Rohrleitungselementes (1) in das Muffenende (4) des andern Rohrleitungselementes (3) eingesteckt und durch einen Elastomer-Dichtungsring (6) abgedichtet ist, wobei als Schubsicherung der Aussenumfang des Spitzendes (2) des einen Rohrleitungselementes (1) durch einen Haltering (10) umfasst ist, auf dem sich ein Schubsicherungsring (8) abstützt, der mit dem Muffenende (4) des andern Rohrleitungselementes (3) festverbunden ist, dadurch gekennzeichnet, dass zwischen der muffenseitigen Stirnfläche des Halteringes (10) und der Stirnfläche (7) des Muffenendes (4) ein elastischer, einen permanenten Druck auf die dem Muffenende (4) zugekehrte Seite des Halterings (10) ausübender Druckring (16) und auf der dem Muffenende (4) abgewandten Seite des Halteringes (10) ein elastischer Dichtungsring (14), z.B. ein Lippendichtungsring, angeordnet ist.

2. Muffenverbindung nach Anspruch 1, dadurch gekennzeichnet, dass dem Schubsicherungsring (8) auf der dem Muffenende (4) zugewandten Seite ein elastischer Dichtungsring (26) zugeordnet ist, zwischen welchem und dem elastischen Lippendichtungsring (14) sowie dem Druckring (16) der Haltering (10) angeordnet ist.

3. Muffenverbindung nach Anspruch 1 oder 2, dadurch gekennzeichnet, dass der Schubsicherungsring (8) einen zylinderförmigen Stutzen (21) mit einem Innengewinde (22) aufweist, der auf das Aussengewinde (24) eines Zwischenringes (23) aufgeschraubt ist, der das Muffenende (4) des andern Rohrleitungselementes (3) umfasst.

4. Muffenverbindung nach Anspruch 3, dadurch gekennzeichnet, dass der Zwischenring (23) als geteilter Ring ausgebildet ist, z.B. mit zwei Halbringen, die an ihren Enden zusammengeschraubt sind.

5. Muffenverbindung nach einem der Ansprüche 1 bis 4, dadurch gekennzeichnet, dass der Haltering (10) als geschlitzter Ring ausgebildet ist und an seiner Kontaktfläche am Innenumfang das Festkrallen an dem Aussenumfang des Spitzendes (1) ermöglichende Mittel (18), z.B. Zähne, Vorsprünge, Spitzen oder Rauhigkeiten, aufweist.

6. Muffenverbindung nach Anspruch 5, dadurch gekennzeichnet, dass der Innenumfang des Halteringes (10) Ausnehmungen (20) aufweist, die zwischen Teilen der Kontaktfläche berührungsfreie Zonen bilden.

7. Muffenverbindung nach einem der Patentansprüche 1 bis 6, gekennzeichnet durch eine elektrische Überbrückung zwischen den Rohrleitungselementen (1, 3), die in zwangsläufigen Übergangskontakten zwischen dem einen Rohrleitungselement (1) und dem Haltering (10), zwischen dem Haltering (10) und dem Schubsicherungsring (8) und zwischen dem Schubsicherungsring (8) und dem andern Rohrleitungselement (3) besteht.

8. Muffenverbindung nach einem der Patentansprüche 1 bis 6, gekennzeichnet durch eine elektrisch isolierende Schicht auf der Innenfläche (9) des Schubsicherungsringes (8) oder auf der Aussenfläche (11) des Halteringes (10).

## Claims

1. Spigot and socket joint for two pipe elements (1, 3), in which the spigot end (2) of one pipe element is inserted into the socket end (4) of the other pipe element (3) and is sealed by an elastomeric gasket ring (6), whereas the thrust securing means of the outer circumference of the spigot end (2) of one of the pipe elements (1) is comprised by a guard ring (10), on which a thrust protection ring (8) is supported, that is firmly connected with the socket end (4) of the other pipe element (3), characterized in that between the spigot side end surface of the guard ring (10) and the end surface (7) of the socket end (4) an elastic thrust ring (16) has been inserted, that exerts a permanent pressure on the side of the thrust ring adjacent to the socket end (4), and that an elastic gasket ring (14), e.g. a lip gasket ring has been placed on the remote side of the guard ring (10).

2. Joint according to claim 1, characterized in that an elastic gasket ring (26) has been assigned to the thrust protection ring (8) on the side adjacent to the socket end (4), and that the guard ring (10) is placed between said gasket ring (26) and the lip gasket ring (14) as well as the thrust ring.

3. Joint according to claim 1 or 2, characterized in that the thrust protection ring (8) includes a cylindric, short feed pipe (21) with an inner thread (22), that is screwed onto the outer thread (24) of an intermediate ring (23), which comprises the socket end (4) of the other pipe element (3).

4. Joint according to claim 3, characterized in that the intermediate ring (23) is designed as a divided ring, with e.g. two semi-rings, which are screwed together at their ends.

5. Joint according to one of the claims 1 to 4, characterized in that the guard ring (10) is designed as a slotted ring, which on the contact surface on the interior circumference is provided with means (28), such as dents, projections, spikes or roughness, for gripping the outer circumference of the spigot end (1).

6. Joint according to claim 5, characterized in that the inner circumference of the guard ring (10) is provided with recesses, which form contact-free zones between parts of the contact surface.

7. Joint according to one of the claims 1 to 6, characterized by an electric bridge between the pipe elements (1, 3), consisting of compulsory transition contacts between one of the pipe elements (1) and the guard ring (10), between this ring (10) and the thrust protection ring (8) and between this ring (8) and the other pipe element (3).

8. Joint between one of the claims 1 to 6, characterized by an electric insulating layer on the inner surface (9) of the thrust protection ring (8) or the outer surface (11) of the guard ring (10).

## Revendications

1. Raccord par manchon pour deux éléments de tuyauterie (1, 3), dans lequel l'extrémité (2) de l'un des éléments de tuyauterie (1) est enfiché dans l'extrémité du manchon (4) de l'autre élément de tuyauterie (3) et isolé de manière étanche au moyen d'une bague d'étanchéité en élastomère (6), la périphérie extérieure de l'extrémité (2) de l'un des éléments de tuyauterie (1) étant entourée par une bague de maintien (10) constituant une sécurité de retenue et sur laquelle s'appuie une bague de sécurité de retenue (8) qui est rigidement reliée à l'extrémité de manchon (4) de l'autre élément de tuyauterie (3), caractérisé en ce qu'une bague de pression (16) élastique, exerçant une pression permanente sur la face de la bague de maintien (10) qui est tournée vers l'extrémité de manchon (4), est disposée entre la face frontale, côté manchon, de la bague de maintien (10) et la face frontale (7) de l'extrémité de manchon (4), et qu'une bague d'étanchéité (14) élastique, par exemple une bague d'étanchéité à lèvre, est disposée sur le côté de la bague de maintien qui est opposé à l'extrémité de manchon (4).

2. Raccord par manchon selon la revendication 1, caractérisé en ce qu'une bague d'étanchéité élastique (26) est associée à la bague de sécurité de retenue (8), sur le côté tourné vers l'extrémité de manchon (4), la bague de maintien (10) étant disposée entre la bague d'étanchéité (26) et la bague d'étanchéité à lèvre (14), ainsi que la bague de pression (16).

3. Raccord par manchon selon la revendication 1 ou 2, caractérisé en ce que la bague de sécurité de retenue (8) présente une tubulure (21) de forme cylindrique avec un taraudage (22) qui est vissée sur le filetage extérieur (24) d'une bague intermédiaire (23) entourant l'extrémité de manchon (4) de l'autre élément de tuyauterie (3).

4. Raccord par manchon selon la revendication 3, caractérisé en ce que la bague intermédiaire (23) est réalisée sous la forme d'une bague divisée, par exemple en deux demi-bagues, assemblées à leurs extrémités par vissage.

5. Raccord par manchon selon l'une des revendications 1 à 4, caractérisé en ce que la bague de maintien (10) est réalisée sous la forme de bague fendue et présente sur sa surface de contact, à la périphérie intérieure, les moyens (18) permettant le cramponnement sur la périphérie extérieure de l'extrémité (1), par exemple des dents, des saillies, des pointes ou des rugosités.

6. Raccord par manchon selon la revendication 5, caractérisé en ce que la périphérie intérieure de la bague de maintien (10) présente des évidements (20) formant des zones exempte de tout contact entre les parties de la surface de contact.

7. Raccord par manchon selon l'une des revendications 1 à 6, caractérisé par un pontage électrique entre les éléments de tuyauterie (1, 3), consistant en des contacts de jonction obligatoires entre l'un des éléments de tuyauterie (1) et la bague de maintien (10), entre la bague de maintien (10) et la bague de sécurité de retenue (8) et entre la bague de sécurité de retenue (8) et l'autre élément de tuyauterie (3).

8. Raccord par manchon selon l'une des revendications 1 à 7, caractérisé par une couche électriquement isolante sur la surface intérieure (9) de la bague de sécurité de retenue ou sur la surface extérieure (11) de la bague de maintien (10).

FIG. 1

FIG. 2

FIG. 3

FIG. 4

FIG. 5

FIG. 6